# EUROPEAN PATENT SPECIFICATION

(11) **EP 0 407 164 B1**
(45) Date of publication and mention of the grant of the patent: **24.05.1995**
(21) Application number: 90307293.2
(22) Date of filing: 04.07.1990
(51) Int. Cl.: G02F 1/1337

(54) **Liquid crystal display device**
Flüssigkristall-Anzeigevorrichtung
Dispositif d'affichage à cristal liquide

(30) Priority: 04.07.1989 JP 173662/89
(43) Date of publication of application: 09.01.1991
(73) Proprietor: SHARP KABUSHIKI KAISHA, Osaka 545 (JP)
(72) Inventor: Itoh, Nobuyuki, Tenri-shi, Nara-ken 632 (JP)
(74) Representative: Brown, Kenneth Richard

(56) References cited:
- WO-A-89/00713
- DE-A- 3 631 151
- US-A- 4 932 757
- PATENT ABSTRACTS OF JAPAN, vol. 12, no. 411 (P-779)[3258], 31st October 1988;& JP-A-63 148 237
- PATENT ABSTRACTS OF JAPAN, vol. 12, no. 488 (P-803)[3335], 20th December 1988;& JP-A-63 200 124
- PATENT ABSTRACTS OF JAPAN, vol. 7, no. 113 (P-197)[1258], 18th May 1983;& JP-A-58 33 215
- PATENT ABSTRACTS OF JAPAN, vol. 9, no. 97 (P-352)[1820], 26th April 1985;& JP-A-59 223 412

## Description

### BACKGROUND OF THE INVENTION

### 1. Field of the Invention

The present invention relates to a liquid cyrstal display device using a ferroelectric liquid crystal.

### 2. Description of the Prior Art

As the information-related equipment represented by computers has been advanced recently, the role of the display device as information transmission means is becoming more and more important. A typical conventional display device is a cathode-ray tube, but it has been gradually replaced by the liquid crystal device lately in the background of the requirements for downsizing of the appliances and reduction of power consumption. There is also a mounting demand for liquid crystal display devices of larger area and larger capacity, of which realization is keenly desired.

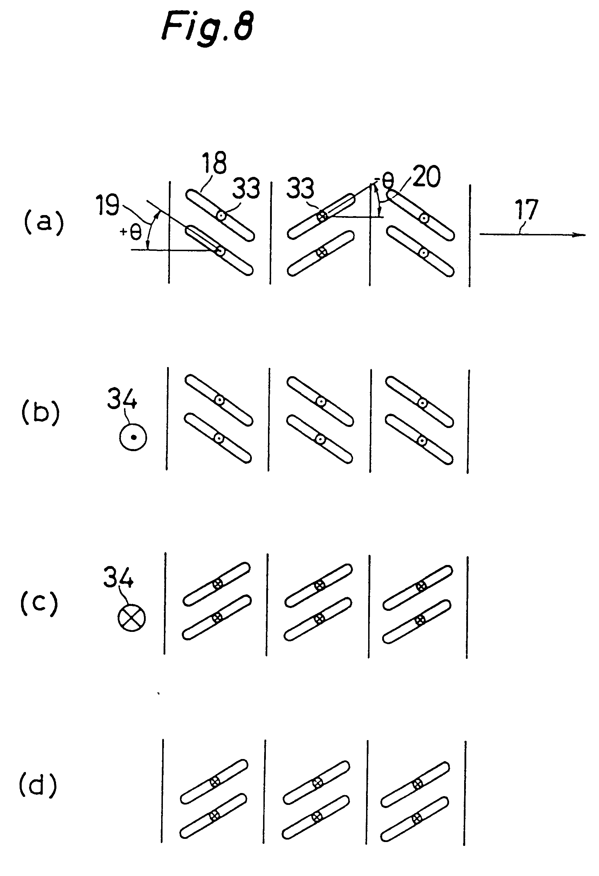

As one of the means for realizing such liquid crystal display devices, the liquid crystal device using a ferroelectric liquid crystal is noticed. For the ferroelectric liquid crystal, usually, chiral smectic liquid crystal is used. Generally, the ferroelectric liquid crystal is designed in a spiral structure in chiral smectic phase, but when implanted in a thin cell, the spiral structure is loosened due to the interface effect, which results in a coexistence of, as shown in Fig. 8 (a), a domain of liquid crystal molecules 18 inclined from a smectic layer normal 17 by an inclination angle +ϑ 19, and a domain inclined in the reverse direction by -ϑ 20. When a voltage is applied to this mixture, as shown in Fig. 8 (b), a domain of aligned spontaneous electrodes, that is, in a state of uniform molecular orientation is obtained. Or when a voltage is reversely applied, as shown in Fig. 8 (c), a domain in a uniform molecular orientation in the reverse direction to Fig. 8 (b) is obtained. Thus, since the double refraction varies along with application and reverse application of voltage, a liquid crystal display device may be formed by using a polarizer.

In this liquid crystal device, as shown in Fig. 8 (d), even when the electric field is cut off, the molecular orientation before cutting off the electric field is maintained by the interface orientation defining power, so that a high memory effect may be obtained. In the case of multiplex drive display of high duty, such memory effect is very effective. In order to obtain such memory effect of maintaining the molecular orientation even after cutting off the electric field in both states of inclination angles +ϑ and -ϑ, it is required to decrease the difference in the orientation defining power between the upper and lower light-transmissive substrates and reduce the orientation asymmetricity of liquid crystal molecules, so that a domain inclined by +ϑ and a domain inclined by -ϑ may coexist.

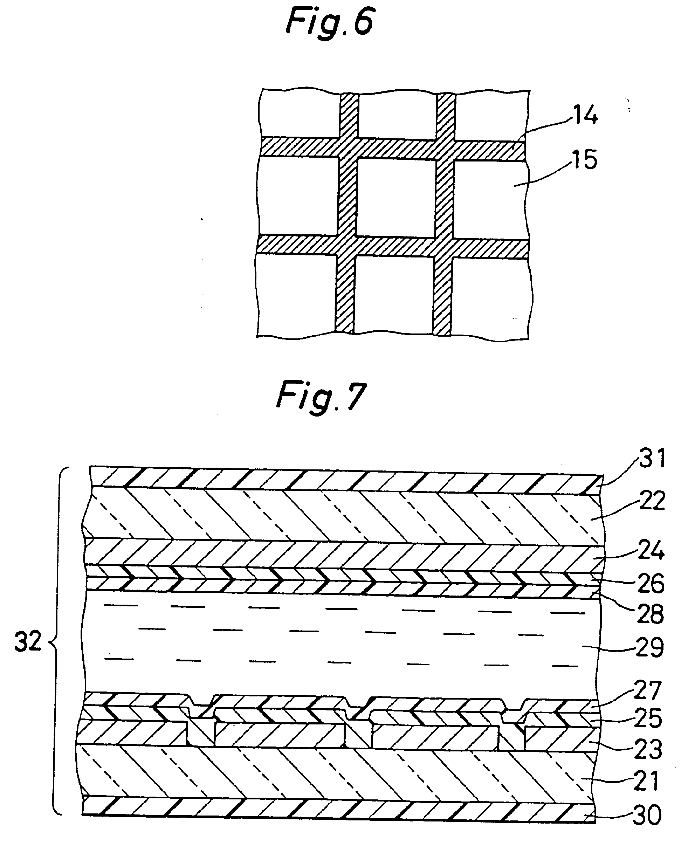

A typical prior art is explained by referring to Fig. 7. On the confronting surfaces of a pair of light-transmissive substrates 21, 22, striped transparent electrodes 23, 24 are disposed to form a matrix electrode structure, and orientation films 27, 28 are formed thereon by way of insulation films 25, 26. The gap between the light-transmissive substrates 21, 22 is filled with a ferroelectric liquid crystal 29, and polarizers 30, 31 are disposed on the outer surfaces of the substrates 21, 22, thereby composing a ferroelectric liquid crystal display device 32.

In such liquid crystal display device, in order to obtain the memory effect in two states of +ϑ and -ϑ, the asymmetricity of orientation of liquid crystal molecules is small.

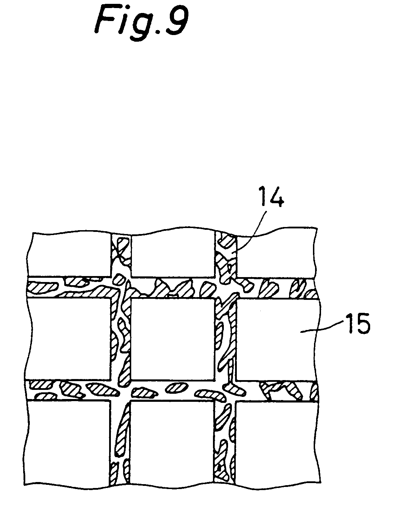

In such conventional liquid crystal display device, voltage is not applied in the region other than the pixel area of the transparent electrode (non-pixel area), and since the asymmetricity of the orientation is small, the +ϑ inclined domain and -ϑ inclined domain coexist. Accordingly, as shown in Fig. 9, in the non-pixel area 14 of display screen of the liquid crystal display device, bright regions and dark regions (shaded) coexist, and the display screen looks uneven and a uniform clarity is not obtained, and the display quality is lowered.

The document DE-A-3 631 151 discloses a liquid crystal display device according to the pre-characterising portions of claims 1, 4 and 8. In this device, the orientation of the liquid crystal in non-pixel portions is controlled by providing one of the substrates with an electric charge.

The present invention seeks to solve the above problems and present a liquid crystal display device of enhanced display quality by realizing a uniform clarity in the non-pixel area as well as a bistable memory effect in the pixel area.

According to one aspect of the present invention, there is provided a liquid crystal display device comprising: liquid crystal filling the gap between a pair of light-transmissive substrates, transparent electrodes arranged on the confronting surfaces of said substrates to form pixel portions and non-pixel portions of each substrate, and orientation films on the whole of said confronting surfaces, characterised in that on at least one of said substrates a first insulation film is formed between the transparent electrodes and the orientation film and a second insulation film of different material to said first insulation film is formed between the portions of said substrate not covered by the electrodes and the orientation film, such that the asymmetry of the liquid crystal molecular orientation is decreased in the regions of the pixel portions and increased in the regions of the non-pixel portions.

In a preferred embodiment, the first insulation film preferably comprises Ta₂O₅, Al₂O₃, SiNₓ, ZnO or Y₂O₃, and the second insulation film preferably comprises SiO₂.

The thickness of the orientation film may be 500 Å or less, and the liquid crystal to be used is a ferroelectric liquid crystal.

According to another aspect of the invention, there is provided a liquid crystal display device comprising: liquid crystal filling the gap between a pair of light-transmissive substrates, transparent electrodes arranged on the confronting surfaces of said substrates to form pixel portions and non-pixel portions of each substrate, and orientation films on the whole of said confronting surfaces, characterised in that on at least one of said substrates an insulation film is formed only on said transparent electrodes, such that the asymmetry of the liquid crystal molecular orientation is decreased in the regions of the pixel portions.

According to a further aspect of the invention, there is provided a liquid crystal display device as claimed in claim 8.

In embodiments of the invention, by forming different insulation films in the pixel portions and non-pixel portions, different molecular orientation characteristics considered to be due to polarity difference of the insulation films may be obtained in the pixel portions and non-pixel portions. At this time, by combining the insulation films so that the asymmetricity of orientation by weaker in the pixel portions and stronger in the non-pixel portions, a bistable memory effect will be obtained in the pixel portions, while a uniform molecular orientation inclined to either +ϑ or -ϑ will be obtained in the non-pixel portions.

In the case of forming the insulation film only on the pixel portions, a bistable memory effect is obtained in the pixel portions, while a uniform molecular orientation inclined to either +ϑ or -ϑ will be obtained in the non-pixel portions.

Thus, by decreasing the asymmetricity of liquid crystal molecular orientation in the pixel portions and increasing the asymmetricity of liquid crystal molecular orientation in the non-pixel portions, a bistable memory effect is obtained in the pixel portions and a uniform clarity is obtained in the non-pixel portions.

### BRIEF DESCRIPTION OF THE DRAWINGS

Other and further features, and advantages of the invention will be more explicit from the following detailed description taken with reference to the drawings wherein:
Fig. 1 is a sectional view of a liquid crystal display device in one of the embodiments of the invention,
Fig. 2 is a sectional view of a liquid crystal display device in other embodiment of the invention,
Fig. 3 is a manufacturing process drawing showing the steps up to formation of insulation film of a liquid crystal display device in an embodiment of the invention,
Fig. 4 is a manufacturing process drawing showing the steps up to formation of insulation film of a liquid crystal display device in a different embodiment of the invention,
Fig. 5 is a manufacturing process drawing showing the steps up to formation of insulation film of a liquid crystal display device in another embodiment of the invention,
Fig. 6 is a plan view showing the display state of pixel portions and non-pixel portions of a liquid crystal display device of the invention,
Fig. 7 is a sectional view of a liquid crystal display device of a prior art,.
Fig. 8 is a diagram showing the operation of a ferroelectric liquid crystal, and
Fig. 9 is a diagram showing the display state of pixel portions and non-pixel portions of a liquid crystal display device of a prior art.

### DETAILED DESCRIPTION OF THE PREFERRED EMBODIMENTS

Now referring to the drawing, preferred embodiments of the invention are described below.

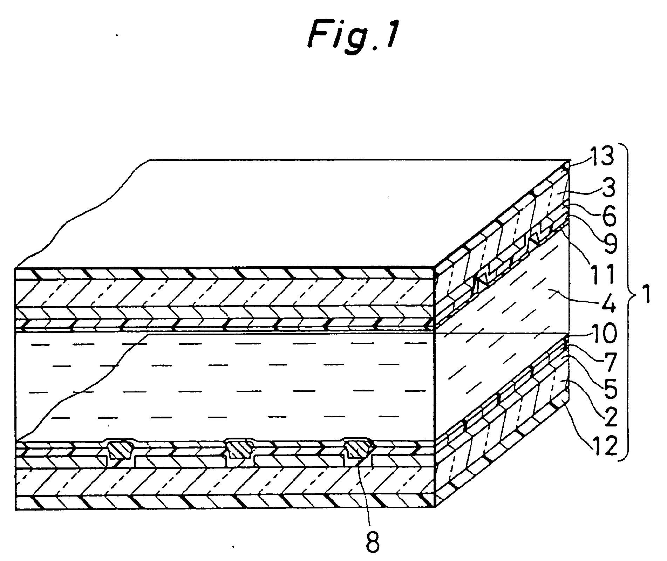

Fig. 1 is a schematic sectional view of an embodiment of the invention. In Fig. 1, a ferroelectric liquid crystal display device 1 comprises light-transmissive substrates 2, 3 made of glass or the like, of which gap is filled with a ferroelectric liquid crystal 4. On the confronting surfaces of the substrates 2, 3, striped transparent electrodes 5, 6 are disposed to form a matrix structure, and insulation films 7, 8, 9 and orientation films 10, 11 are formed in this order on the remaining surfaces of the transparent electrodes and the light-transmissive substrates. On the outer surfaces of the substrates 2, 3, polarizers 12, 13 are disposed so as to form an orthogonal Nicol.

On the entire surface of the substrate 3, Ta₂O₅ is evaporated by gas sputtering technique as insulation film 9. On the substrate 2, the insulation film 7 of the same Ta₂O₅ is formed in the pixel portions, while SiO₂ is formed as insulation film 8 on the insulation film 7 is the non-pixel portions.

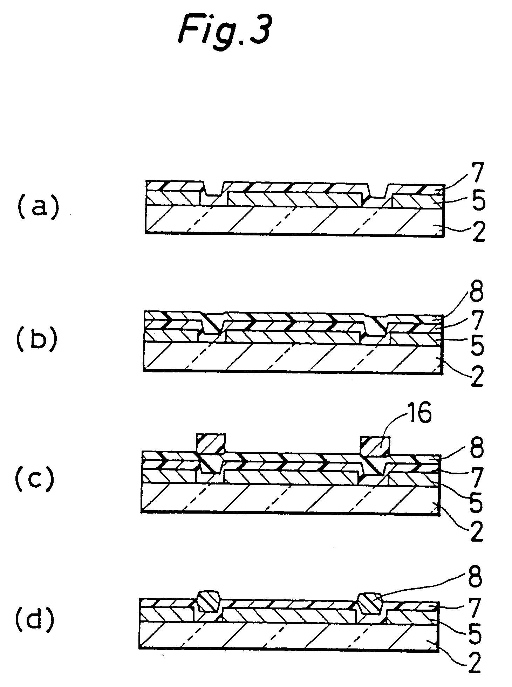

Fig. 3 is a manufacturing process drawing showing the steps of forming different insulation films on the substrate 2 in the liquid crystal display device of the same embodiment. First as shown in Fig. 3 (a), the insulation film 7 of Ta₂O₅ is formed by sputtering method on the substrate 2 on which the striped transparent electrode 5 is formed. Next, as shown in Fig. 3 (b), further on its surface, SiO₂ film (tradename OCD TYPE, II, manufactured by Tokyo Oka Kabushiki Kaisya) is applied as insulation film 8 by spinner coating, and is baked at 350°C. Further, as shown in Fig. 3 (c), a photoresist 16 is applied and temporarily baked at 90°C, exposed with high pressure mercury vapor lamp using a photomask corresponding to the non-electrode shape, developed, and finally baked at 120°C. In succession, as shown in Fig. 3 (d), using a mixed solution of hydrofluoric acid and nitric acid at 1:200, the surface is etched for 20 seconds to peel off the insulation film 8 of SiO₂ in the electrode area, and the photoresist 16 is peeled off by using ethylcellosolve acetate.

Although not shown in Fig. 3, further on its surface, Nylon 6 (tradename of Toray Kabushiki Kaisya, 1% methacresol solution) is applied in a thickness of 500 Å by spinner coating, and is baked to form an orientation film 10. Thus formed orientation film 10 of the substrate 2 and the orientation film 11 of the substrate 3 formed as insulation film 9 of Ta₂O₅ on the entire surface are rubbed so as to be parallel or anti-parallel, and are formed into a cell in a cell thickness of 2.0 »m, and then the ferroelectric liquid crystal is implanted to seal, and two polarizers 12, 13 are disposed on the outer surfaces, thereby forming the liquid crystal display device as shown in Fig. 1. Of course, the liquid crystal display device may be formed by insertion liquid crystal between two substrates 2.

This liquid crystal display device may have different molecular orientation characteristics which are considered to be due to polarity difference of water-soluble SiO₂ and crystalline Ta₂O₅, and a favorable bistable memory effect is obtained in the pixel portions, while a uniform clarity is achieved in the non-pixel portions as shown in Fig. 6.

Instead of Ta₂O₅ used in this embodiment, crystalline Al₂O₃, SiNₓ, ZnO, Y₂O₃ or the like may be used, and the same effects will be obtained.

As for the orientation film to be formed on the insulation film, when formed thinly in a thickness of 500 Å or less, the polarity difference of insulation films seems to appear more clearly, and the uniformity of clarity will be enhanced.

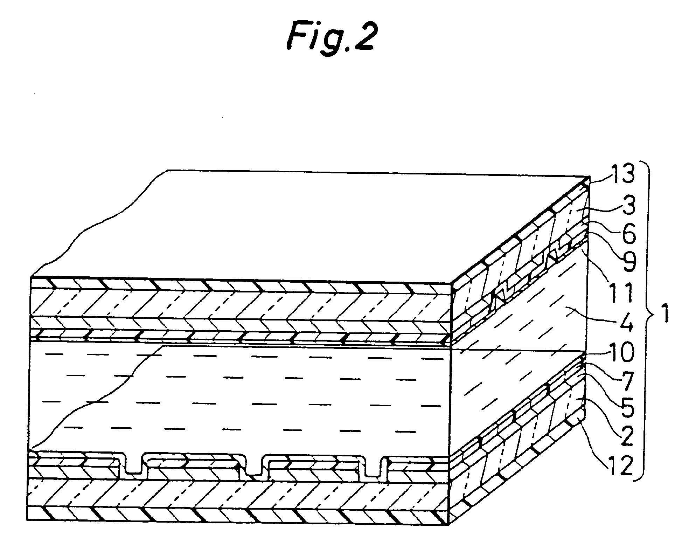

Fig. 2 is a schematic sectional view of other embodiment of the invention. In this embodiment, the parts similar or corresponding to those in the foregoing embodiment are identified with same reference numbers. What is of note is that an insulation film 9 of SiO₂ is formed on the entire surface of the light-transmissive substrate 3, while an insulation film 7 of SiO₂ is formed only in the pixel portions of the other light-transmissive substrate 2, not in its non-pixel portions.

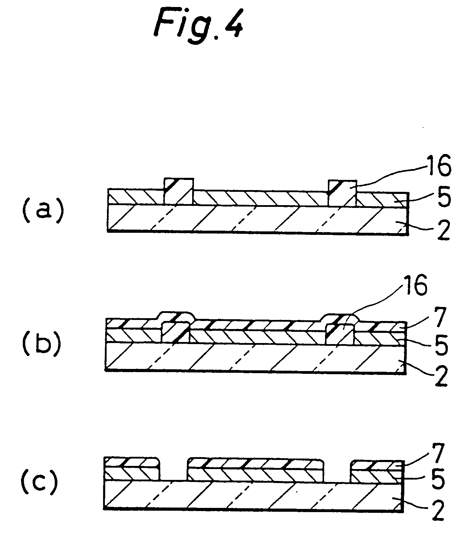

Fig. 4 (a) to Fig. 4 (c) are manufacturing process drawings showing the steps of up to forming the insulation films in the liquid crystal display device of this embodiment. In Fig. 4 (a), in the first place, a photoresist 16 is applied on the substrate 2 on which a striped transparent electrode 5 is formed, and is temporarily baked at 90°C, exposed with high pressure mercury vapor lamp using a photomask corresponding to the non-electrode shape, developed, and finally baked at 120°C. On its surface, as shown in Fig. 4 (b), as insulation film, SiO₂ film 7 (tradename: OCD TYPE II, manufactured by Tokyo Oka Kabushiki Kaisya) is applied by spinner coating, and baked at 350°C. Next, as shown in Fig. 4 (c), the surface is ultrasonically cleaned by using ethylcellosolve acetate, and the insulation film on the non-pixel portions is removed.

Although not shown in Fig. 4, further same as in the foregoing embodiment, Nylon 6 (tradename of Toray Kabushiki Kaisya, 1% methacresol solution) is applied by spinner coating, and baked to form an orientation film 10. Thus formed substrate 2, and the orientation film 11 on the substrate 3 of which entire surface is coated with SiO₂ film (tradename: OCD TYPE II, manufactured by Tokyo Oka Kabushiki Kaisya) as insulation film 9 are rubbed so as to be parallel or anti-parallel, and formed into a cell in a cell thickness of 2.0 »m, and the ferroelectric liquid crystal is implanted to seal, and two polarizers 12, 13 are disposed on the outer surfaces, thereby forming a liquid crystal display device as shown in Fig. 2.

Of course, the liquid crystal display device may be formed by inserting liquid crystal between two substrates 2.

In this liquid crystal display device, a favorable bistable memory effect is obtained in the pixel portions, and a uniform clarity as shown in shaded area in Fig. 6 is obtained in the non-pixel portions.

As for the orientation film to be formed on the insulation film, when formed thinly in a thickness of 500 Å or less, the polarity difference of the insulation films seems to appear more clearly, and the uniformity of clarity will be enhanced.

Besides, instead of SiO₂, Ta₂O₅, Al₂O₃, ZnO, Y₂O₃ or the like may be used, and similar effects will be obtained.

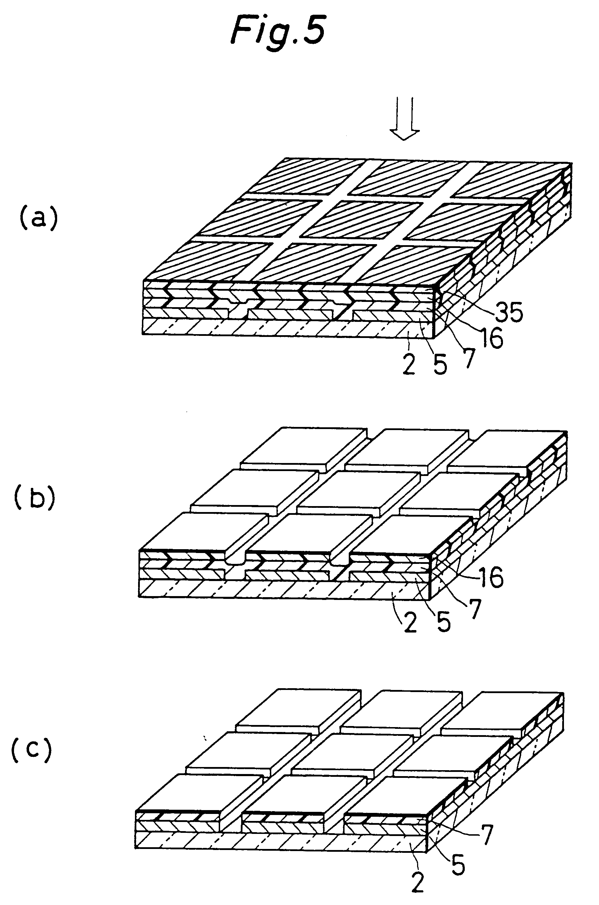

Fig. 5 is manufacturing process drawing showing the steps of up to formation of insulation films of the liquid crystal device shown in Fig. 2, and the steps are different from those of the preceding embodiment.

As shown in Fig. 5 (a), SiO₂ (tradename: OCD TYPE II, manufactured by Tokyo Oka Kabushiki Kaisya) is applied by spinner coating as insulation film 7 on a light-transmissive substrate 2 on which a striped transparent electrode 5 is formed, and is baked at 350°C, and a photoresist 16 is applied, temporarily baked at 90°C, and is exposed by high pressure mercury vapor lamp, using a photomask 35 not transmitting light to the pixel portions as indicated by oblique lines corresponding to the pixel shape. After developing as shown in Fig. 5 (b), the surface is finally baked at 120°C. Then, as shown in Fig. 5 (c), the surface is etched for 20 seconds in a mixed solution of hydrofluoric acid and nitric acid at 1:200, and the SiO₂ in the non-pixel portions is peeled off, and the photoresist 16 is peeled off in ethylcellosolve acetate.

Although not shown in Fig. 5, further thereon at the same time, same as in the preceding embodiment, Nylon 6 (tradename of Toray Kabushiki Kaisya 1% methacresol solution) is applied in a thickness of 500 Å by spinner coating, and baked to form an orientation film 10. Thus composed substrate 2 and the orientation film 11 of the substrate 3 of which surface is entirely coated with SiO₂ as insulation film 9 are rubbed so as to be parallel or anti-parallel, and formed into a cell in a thickness of 2.0 »m, and the ferroelectric liquid crystal is implanted to seal, and two polarizers 12, 13 are disposed on the outer surfaces, thereby forming a liquid crystal display device.

In the liquid crystal display device of the invention, a favorable bistable memory effect is obtained in the pixel portions, and a uniform clarity is obtained in the non-pixel portions.

As for the orientation film to be formed on the insulation film, when formed thinly in a thickness of 500 Å or less, the polarity difference of the insulation films seems to appear more clearly, and the uniformity of clarity will be enhanced.

Besides, instead of SiO₂, Ta₂O₅, Al₂O₃, ZnO, Y₂O₃ or the like may be used, and similar effects will be obtained.

The invention may be embodied in other specific forms without departing from the scope thereof. The present embodiments are therefore to be considered in all respects as illustrative and not restrictive, the scope of the invention being indicated by the appended claims.

## Claims

1. A liquid crystal display device (1) comprising:
liquid crystal (4) filling the gap between a pair of light-transmissive substrates (2,3),
transparent electrodes (5,6) arranged on the confronting surfaces of said substrates to form pixel portions (15) and non-pixel portions (14) of each substrate, and
orientation films (10,11) on the whole of said confronting surfaces,
characterised in that
on at least one of said substrates a first insulation film (7) is formed between the transparent electrodes and the orientation film and a second insulation film (8) of different material to said first insulation film is formed between the portions of said substrate not covered by the electrodes and the orientation film, such that the asymmetry of the liquid crystal molecular orientation is decreased in the regions of the pixel portions and increased in the regions of the non-pixel portions.

2. A liquid crystal display device (1) according to claim 1, wherein the first insulation film (7) comprises Ta₂O₅, Al₂O₃, SiNₓ, ZnO or Y₂O₃, and the second insulation film (8) comprises SiO₂.

3. A liquid crystal display device (1) comprising:
liquid crystal (4) filling the gap between a pair of light-transmissive substrates (2,3),
transparent electrodes (5,6) arranged on the confronting surfaces of said substrates to form pixel portions (15) and non-pixel portions (14) of each substrate, and
orientation films (10,11) on the whole of said confronting surfaces,
characterised in that
on at least one of said substrates an insulation film (7) is formed only on said transparent electrodes, such that the asymmetry of the liquid crystal molecular orientation is decreased in the regions of the pixel portions.

4. A device (1) according to claim 3, wherein said insulation film (7) is formed on both of said substrates (2,3).

5. A liquid crystal display device (1) according to claim 3 or 4, wherein the insulation film (7) comprises SiO₂, Ta₂O₅, Al₂O₃, ZnO or Y₂O₃.

6. A liquid crystal display device (1) according to any preceding claim, wherein the thickness of the orientation film (10;11) is 500 Å or less.

7. A liquid crystal display device (1) according to any preceding claim, wherein the liquid crystal (4) is a ferroelectric liquid crystal.

8. A liquid crystal display device (1) in which an array of pixels is defined by a first set of transparent electrodes (5) on one of a pair of opposed light-transmissive substrates (2,3) and a second set of transparent electrodes (6) provided on the other substrate, each said substrate carrying an orientation film (10;11) over the respective set of electrodes,
characterised in that
on at least one (2) of said substrates, an insulation layer (7;8) is provided under the orientation film either on pixel areas (15) or on non-pixel areas (14) such that the asymmetry of the liquid crystal molecular orientation is decreased in the pixel areas relative to the non-pixel areas.

## Patentansprüche

1. Flüssigkristall-Anzeigevorrichtung (1) mit:
- einem Flüssigkristall (4), der den Zwischenraum zwischen einem Paar lichtdurchlässiger Substrate (2, 3) ausfüllt;
- transparenten Elektroden (5, 6), die auf den einander gegenüberstehenden Flächen der Substrate angeordnet sind, um auf jedem Substrat Pixelbereiche (15) und pixelfreie Bereiche (14) auszubilden; und
- Ausrichtungsfilmen (10, 11) auf den gesamten einander gegenüberstehenden Flächen;
**dadurch gekennzeichnet, daß**
- auf mindestens einem der Substrate ein erster Isolierfilm (7) zwischen den transparenten Elektroden ausgebildet ist und der Ausrichtungsfilm und ein zweiter Isolierfilm (8) aus einem anderen Material als dem des ersten Isolierfilms zwischen den nicht von den Elektroden bedeckten Bereichen des Substrats und dem Ausrichtungsfilm ausgebildet ist, so daß die Asymmetrie der Flüssigkristall-Molekülausrichtung in den Pixelbereichen erhöht und in den pixelfreien Bereichen erniedrigt ist.

2. Flüssigkristall-Anzeigevorrichtung (1) nach Anspruch 1, bei der der erste Isolierfilm (7) aus Ta₂O₅, Al₂O₃, SiNₓ, ZnO oder Y₂O₃ besteht und der zweite Isolierfilm (8) aus SiO₂ besteht.

3. Flüssigkristall-Anzeigevorrichtung (1) mit:
- einem Flüssigkristall (4), der den Zwischenraum zwischen einem Paar lichtdurchlässiger Substrate (2, 3) ausfüllt;
- transparenten Elektroden (5, 6), die auf den einander gegenüberstehenden Flächen der Substrate angeordnet sind, um auf jedem Substrat Pixelbereiche (15) und pixelfreie Bereiche (14) auszubilden; und
- Ausrichtungsfilmen (10, 11) auf den gesamten einander gegenüberstehenden Flächen;
**dadurch gekennzeichnet, daß**
- auf mindestens einem der Substrate ein Isolierfilm (7) nur auf den transparenten Elektroden ausgebildet ist, so daß die Asymmetrie der Flüssigkristall-Molekülausrichtung in den Pixelbereichen verringert ist.

4. Vorrichtung (1) nach Anspruch 3, bei der der Isolierfilm (7) auf beiden Substraten (2, 3) ausgebildet ist.

5. Flüssigkristall-Anzeigevorrichtung (1) nach einem der Ansprüche 3 oder 4, bei der der Isolierfilm (7) aus SiO₂, Ta₂O₅, Al₂O₃, ZnO oder Y₂O₃ besteht.

6. Flüssigkristall-Anzeigevorrichtung (1) nach einem der vorstehenden Ansprüche, bei der die Dicke des Ausrichtungsfilms (10, 11) 500 Å oder weniger beträgt.

7. Flüssigkristall-Anzeigevorrichtung (1) nach einem der vorstehenden Ansprüche, bei der der Flüssigkristall (4) ein ferroelektrischer Flüssigkristall ist.

8. Flüssigkristall-Anzeigevorrichtung (1), bei der ein Pixelarray durch einen ersten Satz transparenter Elektroden (5) auf einem Paar einander gegenüberstehender lichtdurchlässiger Substrate (2, 3) und einen zweiten Satz transparenter Elektroden (6) auf dem anderen Substrat festgelegt ist, wobei jedes Substrat über dem jeweiligen Satz von Elektroden einen Ausrichtungsfilm (10, 11) trägt;
**dadurch gekennzeichnet, daß**
- auf mindestens einem (2) der Substrate eine Isolierschicht (7, 8) unter dem Ausrichtungsfilm entweder auf den Pixelbereichen (15) oder den pixelfreien Bereichen (14) ausgebildet ist, so daß die Asymmetrie der Flüssigkristall-Molekülausrichtung in den Pixelbereichen im Vergleich zu der in den pixelfreien Bereichen verringert ist.

## Revendications

1. Dispositif d'affichage à cristal liquide (1) comprenant :
un cristal liquide (4) remplissant l'intervalle entre une paire de substrats phototransmetteurs (2, 3),
des électrodes transparentes (5, 6) agencées sur les surfaces en regard desdits substrats pour former des parties de pixels (15) et des parties sans pixels (14) sur chaque substrat, et
des films d'orientation (10, 11) sur la totalité desdites surfaces en regard,
caractérisé en ce que
sur au moins l'un desdits substrats, un premier film isolant est formé entre les électrodes transparentes et le film d'orientation et un deuxième film isolant d'une matière différente de celle dudit premier film isolant est formé entre les parties dudit substrat non recouvertes par les électrodes et le film d'orientation de telle sorte que l'asymétrie de l'orientation moléculaire du cristal liquide soit réduite dans les régions des parties de pixels et augmentée dans les régions des parties sans pixels.

2. Dispositif d'affichage à cristal liquide (1) selon la revendication 1, dans lequel le premier film isolant (7) est constitué de Ta₂O₅, de Al₂O₃, de SiNₓ, de ZnO ou de Y₂O₃ et le deuxième film isolant (8) est constitué de SiO₂.

3. Dispositif d'affichage à cristal liquide (1) comprenant :
un cristal liquide (4) remplissant l'intervalle entre une paire de substrats phototransmetteurs (2, 3),
des électrodes transparentes (5, 6) agencées sur les surfaces en regard desdits substrats pour former des parties de pixels (15) et des parties sans pixels (14) sur chaque substrat, et
des films d'orientation (10, 11) sur la totalité desdites surfaces en regard,
caractérisé en ce que :
sur au moins l'un desdits substrats, un film isolant (7) est formé uniquement sur lesdites électrodes transparentes de telle sorte que l'asymétrie de l'orientation moléculaire du cristal liquide soit réduite dans les régions des parties de pixels.

4. Dispositif d'affichage à cristal liquide (1) selon la revendication 3, dans lequel ledit film isolant (7) est formé sur lesdits deux substrats (2, 3).

5. Dispositif d'affichage à cristal liquide (1) selon la revendication 3 ou 4, dans lequel le film isolant (7) est constitué de SiO₂, de Al₂O₃, de ZnO ou de Y₂O₃.

6. Dispositif d'affichage à cristal liquide (1) selon l'une quelconque des revendications précédentes, dans lequel l'épaisseur du film d'orientation (10, 11) est de 500 Å ou moins.

7. Dispositif d'affichage à cristal liquide (1) selon l'une quelconque des revendications précédentes, dans lequel le cristal liquide (4) est un cristal liquide ferroélectrique.

8. Dispositif d'affichage à cristal liquide (1), dans lequel un réseau de pixels est défini par un premier ensemble d'électrodes transparentes (5) sur l'un de deux substrats phototransmetteurs opposés (2, 3) et un deuxième ensemble d'électrodes transparentes (6) appliqué sur l'autre substrat, chaque dit substrat portant un film d'orientation (10, 11) sur l'ensemble respectif d'électrodes,
caractérisé en ce que :
sur au moins un (2) desdits substrats, une couche isolante (7, 8) est appliquée sous le film d'orientation soit dans des zones de pixels (15), soit dans des zones sans pixels (14) de telle sorte que l'asymétrie d'orientation moléculaire du cristal liquide soit réduite dans les zones de pixels par rapport aux zones sans pixels.
